# DEMANDE DE BREVET EUROPEEN

(11) **EP 0 596 768 A1**
(43) Date de publication de la demande: **11.05.1994**
(21) Numéro de dépôt: 93402594.1
(22) Date de dépôt: 22.10.1993
(51) Int. Cl.: F41A 1/04, G05D 16/10

(54) **Soupape pour commander l'écoulement d'un fluide sous pression au travers de la section de passage entre deux conduits d'entrée et de sortie**

(30) Priorité: 02.11.1992 FR 9213099
(71) Demandeur: GIAT Industries, F-78034 Versailles Cédex (FR)
(72) Inventeur: Begneu, Michel, F-18000 Bourges (FR)
(74) Mandataire: Orès, Bernard

(57) **Abrégé**

Soupape pour commander l'écoulement d'un fluide sous pression entre deux conduits d'entrée (2) et de sortie (3), comprenant un obturateur (5) qui, lorsque la soupape (1) est fermée, est en appui sur un siège (15), sous la sollicitation de la force exercée par un ressort (12) à l'encontre de celle exercée par la pression d'un fluide présent dans le conduit d'entrée (2) sur une première face (7a) de l'obturateur (5). Ce dernier comporte une seconde face (7b) sur laquelle le fluide sous pression exerce une force opposée à celle qu'il exerce sur sa première face (7a) lorsque cette soupape est fermée. Ainsi, la force de rappel du ressort (12) doit être seulement supérieure à la différence des forces précitées pour maintenir la soupape fermée.

L'invention s'applique par exemple à un système d'injection d'un agent de propulsion pour une arme à propulseur liquide.

## Description

La présente invention concerne une soupape pour commander l'écoulement d'un fluide sous pression au travers de la section de passage définie entre deux conduits d'entrée et de sortie, du type comprenant un obturateur mobile qui, lorsque la soupape est en position de fermeture, est en appui sur un siège, sous la sollicitation de la force exercée par un élément de rappel élastique à l'encontre de celle exercée sur une première face de l'obturateur par la pression du fluide présent dans le conduit d'entrée, pour fermer la section de passage entre les deux conduits.

Dans ce type de soupape, l'élément de rappel élastique qui maintient la soupape en position fermée est généralement constitué par un ressort dont les dimensions et le coefficient d'élasticité sont choisis en fonction de la force exercée par la pression du fluide sur l'obturateur de la soupape. Plus la pression est élevée et plus la force de rappel du ressort doit être importante pour maintenir la soupape en position fermée, ce qui tend à augmenter les dimensions du ressort.

Le but de l'invention est de concevoir une soupape dans laquelle, pour une pression donnée du fluide, la force exercée par l'élément de rappel élastique pour maintenir la soupape en position fermée, soit notablement inférieure à celle exercée par un élément de rappel élastique d'une soupape du type précité.

A cet effet, l'invention propose une soupape du type précité qui est caractérisée en ce que l'obturateur mobile comporte une seconde face sur laquelle le fluide sous pression exerce également une force, mais de sens opposé à celle qu'il exerce sur la première face de l'obturateur lorsque la soupape est fermée, cette seconde face ayant une section transversale inférieure à celle de la première face, de sorte que la force de rappel de l'élément élastique doit être seulement supérieure à la différence des forces précitées exercées par la pression du fluide sur les deux faces de l'obturateur pour maintenir la soupape fermée.

D'une manière classique, l'ouverture de la soupape est commandée par une augmentation de la pression du fluide présent dans le conduit d'entrée, c'est-à-dire lorsque la différence des forces précitées est devenue supérieure à celle exercée par l'élément de rappel élastique qui est constitué par un ressort par exemple.

Selon une autre caractéristique de l'invention, l'obturateur de la soupape est constitué par un élément tubulaire dont une face d'extrémité est fermée par une paroi de fond ou paroi avant destinée à coopérer avec le siège de soupape, cette paroi étant percée d'une ouverture qui débouche dans une chambre définie à l'intérieur de l'obturateur, les première et seconde faces précitées sur lesquelles s'exerce la pression du fluide étant respectivement formées par les deux faces de ladite paroi avant de l'obturateur, et dont l'autre face d'extrémité comporte une paroi arrière sur laquelle prend appui l'élément de rappel élastique pour solliciter l'obturateur en appui sur son siège.

Selon encore une autre caractéristique de l'invention, la chambre précitée est délimitée entre la paroi avant de l'obturateur et un piston qui est centré et monté coulissant, de manière étanche, à l'intérieur de l'obturateur.

Selon un mode de réalisation préférentiel de l'invention, les conduits d'entrée et de sortie s'étendent suivant deux axes perpendiculaires, et l'obturateur est monté coulissant, de manière étanche, à l'intérieur du conduit d'entrée en étant introduit, par sa paroi avant, dans une extrémité ouverte du conduit d'entrée pour que la paroi avant puisse coopérer avec le siège défini autour du conduit d'entrée au niveau de sa section de passage avec le conduit de sortie, le ressort de rappel prenant respectivement appui sur la paroi arrière de l'obturateur et sur un bouchon qui ferme ladite extrémité ouverte du conduit d'entrée pour maintenir l'obturateur en appui sur son siège.

D'une manière préférentielle, le ressort de rappel est monté autour d'une tige qui prolonge le bouchon précité et à l'extrémité de laquelle prend appui le piston de l'obturateur.

Ainsi, avec une telle soupape, le ressort de rappel est dimensionné de manière à exercer une force qui est seulement au moins égale à la différence des forces exercées par la pression du fluide sur les deux faces de la paroi avant de l'obturateur, pour maintenir la soupape fermée. Par suite d'une augmentation de la pression dans le conduit d'entrée et dès que la différence des forces précitées devient supérieure à celle exercée par le ressort de rappel, l'obturateur se dégage de son siège et la soupape passe en position d'ouverture.

Une telle soupape peut être par exemple utilisée dans une arme à propulseur liquide, en étant logée dans une canalisation qui assure l'acheminement sous pression de l'agent de propulsion entre un réservoir de stockage et la chambre de combustion du tube de l'arme. Une telle application sera décrite en détail plus loin.

D'autres avantages, caractéristiques et détails de l'invention ressortiront de la description explicative qui va suivre faite en référence aux dessins annexés, donnnés uniquement à titre d'exemples, et dans lequels :
- la figure 1a est une vue en coupe longitudinale d'une soupape conforme à l'invention qui est représentée dans une position où elle ferme la section de passage entre deux conduits d'entrée et de sortie,
- la figure 1b est une vue similaire à la figure la, mais avec la soupape représentée en position d'ouverture, et
- la figure 2 est une vue en coupe schématique d'une arme à propulseur liquide qui est équipée d'une soupape conforme à l'invention montée dans une canalisation qui assure l'acheminement sous pression d'un agent de propulsion jusqu'à une chambre de combustion du tube de l'arme.

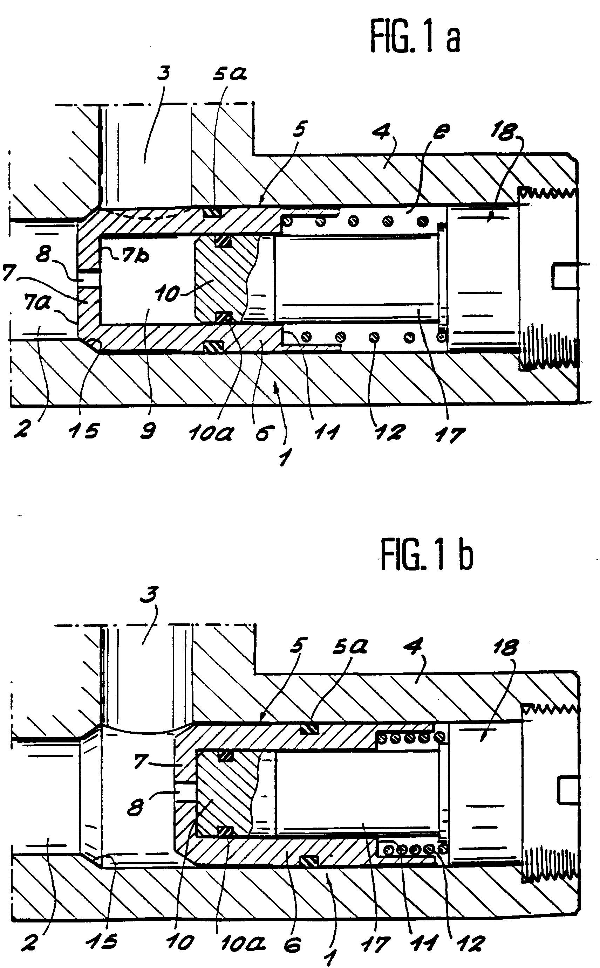

Selon un mode de réalisation illustré aux figures 1a et 1b, une soupape 1 selon l'invention est destinée à commander l'écoulement d'un fluide sous pression au travers de la section de passage définie entre deux conduits d'entrée 2 et de sortie 3 percés dans un corps 4.

La soupape 1 comprend un obturateur 5 formé d'un élément tubulaire 6 dont une face d'extrémité, ou face avant, est fermée par une paroi avant 7 qui est percée d'une ouverture centrale 8. Cette ouverture 8 (figure 1a) débouche dans une chambre 9 définie à l'intérieur de l'obturateur 5 entre la paroi avant 7 et un piston 10 monté coulissant, de manière étanche par un joint d'étanchéité 10a, à l'intérieur de l'obturateur 5. La face arrière de l'obturateur 5 est par exemple délimitée par le fond annulaire d'un évidement axial interne 11 usiné dans l'épaisseur de l'élément tubulaire 6 et sur lequel va venir prendre appui une extrémité d'un élément de rappel élastique, tel qu'un ressort 12.

L'obturateur 5 de la soupape est introduit par sa paroi avant 7 dans une extrémité ouverte du conduit d'entrée 2. Plus précisément, l'obturateur 5 est monté coulissant, de manière étanche par un joint d'étanchéité 5a, à l'intérieur du conduit d'entrée 2 jusqu'à venir prendre appui par sa paroi avant 7 sur un siège annulaire 15 usiné dans le corps 4 au niveau de la section de passage définie entre les deux conduits 2 et 3. La face externe 7a de la paroi avant 7 de l'obturateur 5 délimite, à sa périphérie, une portée tronconique destinée à venir en appui sur une portée de forme conjuguée délimitée au niveau du siège 15 pour obturer la section de passage entre les deux conduits 2 et 3.

La chambre 9 définie à l'intérieur de l'obturateur 5 a une surface en section transversale inférieure à la surface de la face externe 7a de la paroi avant 7 de l'obturateur 5 sur laquelle agit le fluide sous pression lorsque la soupape 1 est fermée.

Le ressort de rappel 12 est monté librement autour d'une tige 17 qui prolonge un bouchon 18 qui ferme l'extrémité ouverte du conduit d'entrée 2 par laquelle la soupape 1 a été introduite. L'extrémité libre de cette tige 17 sert de surface d'appui pour le piston 10 logé à l'intérieur de l'obturateur 5.

Lorsque la soupape 1 est en position de fermeture (figure 1a), la paroi avant 7 de l'obturateur 5 est en appui sur le siège 15 sous la sollicitation du ressort 12, de sorte qu'un fluide sous pression présent dans le conduit d'entrée 2 ne peut s'écouler au travers de sa section de passage avec le conduit 3. Il est à noter que la longueur de l'élément cylindrique 6 qui forme le corps de l'obturateur 5, est supérieure au diamètre du conduit de sortie 3, et que l'espace annulaire e soumis à la pression atmosphérique et délimité autour de la tige 17 pour recevoir le ressort 12, doit être suffisant pour ne pas entraver le mouvement de recul de l'obturateur 5, lorsque la soupape passera en position d'ouverture.

Le fluide sous pression qui est présent dans le conduit d'entrée 2, pénètre à l'intérieur de la chambre 9 par l'ouverture 8 de la paroi avant 7 de l'obturateur 5. Le fluide exerce alors sa pression à la fois sur la face externe 7a et la face interne 7b de la paroi avant 7 de l'obturateur 5. Comme la surface de contact du fluide avec la face 7a est supérieure à celle de la face 7b, la force que doit exercer le ressort de rappel 12 pour maintenir l'obturateur 5 en appui sur son siège 15 doit seulement être supérieure à la différence des forces exercées simultanément par le fluide sous pression sur les deux faces opposées 7a et 7b de sa paroi avant 7.

Lorsque la pression du fluide dans le conduit 2 augmente et devient suffisante pour provoquer le recul de l'obturateur 5 à l'encontre de la force exercée par le ressort 12, la soupape 1 passe en position d'ouverture (figure 1b) et libère la section de passage définie entre les deux conduits 2 et 3. L'augmentation de la pression du fluide dans le conduit d'entrée 2 peut résulter d'une compression du fluide obtenue par un piston par exemple mobile à l'intérieur d'un réservoir de stockage du fluide.

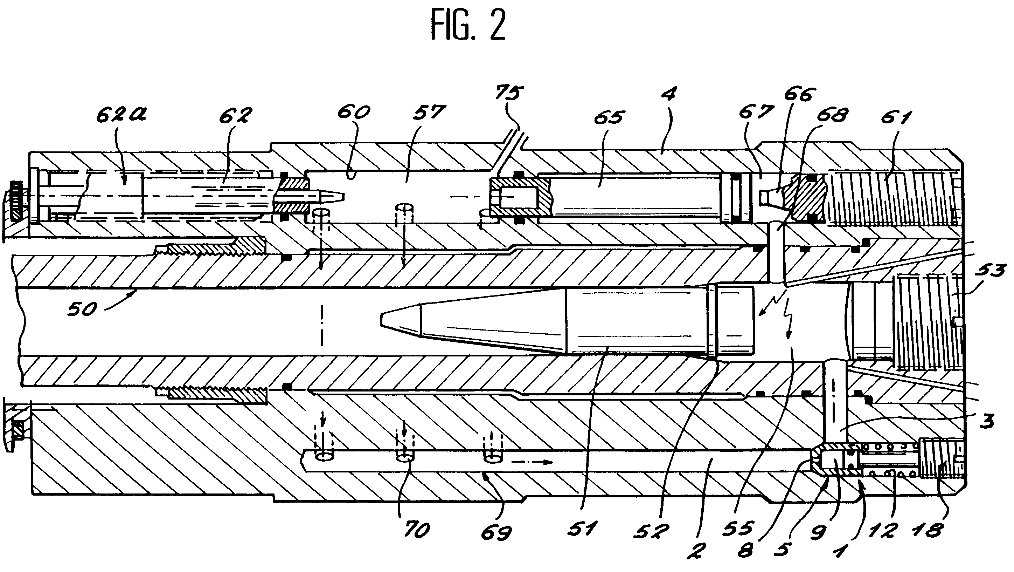

Un exemple d'application d'une telle soupape 1 est donné à titre d'exemple sur la figure 2, qui illustre partiellement et schématiquement un tube 50 d'une arme de moyen ou gros calibre à propulseur liquide, avec un projectile 51 mis à poste dans le tube 50 au niveau d'un cône de forcement 52, d'une façon connue en soi.

L'extrémité arrière du tube 50 est obturable de manière étanche par un obturateur de culasse 53. Une chambre 55 de combustion est délimitée dans le tube 50 entre le projectile 51 et l'obturateur de culasse 53 en position fermée de celui-ci.

Cette arme à propulseur liquide est équipée d'un système d'injection pour injecter sous pression dans la chambre 55 un agent de propulsion, tel qu'un ergol sous forme liquide ou gélifiée, stocké dans au moins un réservoir 57 défini dans un corps annulaire 4 rapporté autour du tube 50 de l'arme. Pour cela, un canal longitudinal 60 est percé dans le corps 4 parallèlement à l'axe du tube 50, et le réservoir 57 à volume variable est défini dans le canal 60 entre deux fonds 61 et 62 respectivement constitués par un bouchon qui ferme de façon étanche une extrémité du canal 60, et par un élément cylindrique réglable en position axiale à l'intérieur du canal 60 et qui ferme également de manière étanche l'autre extrémité de celui-ci. Un piston 65 multiplicateur de pression est monté coulissant à l'intérieur du réservoir 57. Le fond 61 formé par le bouchon se prolonge à l'intérieur du réservoir 57 par une butée axiale 66 sur laquelle le piston 65 prend appui lorsque le réservoir 57 est rempli. Dans cette position du piston 65, une chambre 67 est délimitée dans le réservoir 57 autour de la butée 66. Cette chambre 67 communique avec la chambre 55 de combustion par une canalisation d'entrée 68 formée d'un canal percé dans le corps 4 et dans la paroi du tube 50.

Le réservoir 57 communique également avec la chambre 55 de combustion par une canalisation de sortie 69 percée à l'intérieur du corps 4. Cette canalisation de sortie 69 est constituée d'un canal longitudinal ou conduit 2 qui communique avec le réservoir 57 par au moins un conduit de liaison 70 et avec la chambre 55 de combustion par un conduit radial 3. Une soupape 1 selon l'invention, telle que décrite et représentée sur les figures 1a et 1b, est logée dans le conduit 2 au niveau de la section de passage définie entre les conduits 2 et 3.

Un tel système d'injection fonctionne de la manière décrite ci-après.

Avant le tir du projectile 51 mis à poste dans le tube 50, on procède au réglage du volume du réservoir 57 pour stocker la quantité totale d'agent de propulsion nécessaire au tir du projectile 51. Cette opération consiste à régler la position axiale du fond de cylindre 62 au moyen d'un mécanisme de réglage 62a. Une fois le réglage du volume du réservoir 57 effectué, on envoie sous faible pression l'agent de propulsion dans le réservoir 57 qui communique, à cet effet, par un canal 75 avec un moyen de remplissage (non représenté). L'agent de propulsion se répand dans le conduit 2 et pénètre dans la chambre 9 de l'obturateur de la soupape 1. La soupape 1 reste en position de fermeture avec la paroi avant 7 de l'obturateur 5 en appui sur le siège 15, dès l'instant où la force exercée par le ressort de rappel 12 sur la face arrière de l'obturateur 5 est supérieure à la différence des forces exercées par l'agent de propulsion sur les deux faces opposées 7a et 7b de la paroi avant 7 de l'obturateur 5.

On injecte et on enflamme ensuite une faible quantité d'agent de propulsion directement dans la chambre 55 de combustion. Les gaz de combustion pénètrent librement à l'intérieur de la chambre 67 par la canalisation d'entrée 68 et, dès que leur pression devient suffisante, ils entraînent le déplacement du piston 65. Cette pression est cependant insuffisante pour provoquer l'éjection du projectile 51. En se déplaçant, le piston 65 comprime l'agent de propulsion contenu dans le réservoir 57 et la canalisation de sortie 69 associés. Dès que l'agent de propulsion comprimé par le piston 65 a atteint la pression nécessaire pour ouvrir la soupape 1, celle-ci libère la section de passage définie entre les deux conduits 2 et 3. L'agent peut alors s'écouler jusqu'à la chambre 55 de combustion et entraîner ensuite l'éjection du projectile 51 lorsque la pression des gaz de combustion atteint une valeur suffisante.

Bien entendu, l'invention n'est nullement limitée au mode de réalisation de la soupape telle qu'illustrée sur les dessins. En particulier, on peut modifier la forme de l'obturateur 5 et son principe de montage sans sortir du cadre de l'invention.

## Revendications

1. Soupape pour commander l'écoulement d'un fluide sous pression au travers de la section de passage définie entre deux conduits d'entrée et de sortie, du type comprenant un obturateur mobile qui, lorsque la soupape est fermée, est en appui sur un siège, sous la sollicitation de la force exercée par un élément de rappel élastique à l'encontre de celle exercée sur une première face de l'obturateur par la pression du fluide présent dans le conduit d'entrée pour fermer ladite section de passage entre les deux conduits, caractérisée en ce que l'obturateur (5) comporte une seconde face (7b) sur laquelle le fluide sous pression exerce également une force, mais de sens opposé à celle qu'il exerce sur sa première face (7a) lorsque la soupape est fermée, cette seconde face (7b) ayant une section transversale inférieure à celle de la première face (7a), de sorte que la force de rappel de l'élément élastique (12) doit être seulement supérieure à la différence des forces précitées exercées par la pression du fluide sur les deux faces (7a, 7b) de l'obturateur (5) pour maintenir la soupape (1) fermée.

2. Soupape selon la revendication 1, caractérisée en ce que l'ouverture de la soupape (1) est commandée par une augmentation de la pression du fluide présent dans le conduit d'entrée (2), lorsque la différence des forces exercées par le fluide sous pression sur les deux faces (7a,7b) de l'obturateur (5) est devenue supérieure à celle exercée par l'élément de rappel élastique (12).

3. Soupape selon la revendication 2, caractérisée en ce que l'obturateur (5) est constitué par un élément tubulaire (6) dont une face d'extrémité est fermée par une paroi de fond ou paroi avant (7) percée d'une ouverture (8) qui débouche dans une chambre (9) définie à l'intérieur de l'obturateur (5), et dont l'autre face d'extrémité comporte une paroi arrière (11) sur laquelle est destinée à agir l'élément de rappel élastique (12) pour solliciter l'obturateur (5) en appui sur son siège (15), les deux faces (7a,7b) soumises à la pression du fluide étant formées par les deux faces de ladite paroi avant (7).

4. Soupape selon la revendication 3, caractérisée en ce que ladite chambre (9) est délimitée entre la paroi avant (7) de l'obturateur (5) et un piston (10) centré et monté coulissant, de manière étanche, à l'intérieur de l'obturateur (5).

5. Soupape selon la revendication 4, caractérisée en ce que les deux conduits (2, 3) sont perpendiculaires l'un à l'autre, et en ce que l'obturateur (5) est monté coulissant et de manière étanche dans le conduit d'entrée (2) en étant introduit par une extrémité ouverte de celui-ci pour que sa paroi avant (7) coopère avec ledit siège (15) défini dans ledit conduit d'entrée (2) au niveau de la section de passage entre les deux conduits (2,3), l'élément de rappel élastique, tel qu'un ressort (12), prenant respectivement appui sur la face arrière (11) de l'obturateur (5) et sur un bouchon (18) qui ferme ladite extrémité ouverte du conduit d'entrée (2).

6. Soupape selon la revendication 5, caractérisée en ce que le ressort de rappel (12) est monté autour d'une tige (17) qui prolonge le bouchon (18) et à l'extrémité de laquelle prend appui le piston (10) logé dans l'obturateur (5).

7. Soupape pour système d'injection sous pression d'un propulseur liquide à l'intérieur d'une chambre de combustion définie à l'intérieur du tube d'une arme, comprenant au moins une canalisation de transfert d'un agent de propulsion entre un réservoir et ladite chambre sous la commande d'un piston monté coulissant à l'intérieur du réservoir, caractérisée en ce que la soupape est montée dans ladite canalisation et est du type défini par l'une quelconque des revendications précédentes.
